# EUROPEAN PATENT SPECIFICATION

(11) **EP 0 579 508 B1**
(45) Date of publication and mention of the grant of the patent: **28.05.1997**
(21) Application number: 93305613.7
(22) Date of filing: 16.07.1993
(51) Int. Cl.: B64F 1/02

(54) **Landing of aircraft**
Landendes Luftfahrzeug
Atterrissage d'un avion

(30) Priority: 16.07.1992 GB 9215105
(43) Date of publication of application: 19.01.1994
(73) Proprietor: BRITISH AEROSPACE PUBLIC LIMITED COMPANY, Farnborough, Hants. GU14 6YU (GB)
(72) Inventor: Seyfang, George, Preston, Lancashire PR4 1AX (GB)
(74) Representative: Eastmond, John

(56) References cited:
- DE-A- 1 164 245
- GB-A- 1 036 015

## Description

This invention relates to apparatus for use during a landing phase of flight of an aircraft, and more particularly relates to apparatus for assisting aircraft to land where only a small area of runway is available, for example when landing on an aircraft carrier.

It is common practice for aircraft carriers to proceed at a speed of, say, 20 knots when aircraft are taking off from or landing on the deck. This provides the aircraft with a headwind which is advantageous in both landing and taking off manoeuvres. Furthermore, the advantageous effect of the headwind can be increased by steering the ship so that it heads into the wind, thus increasing the "wind-over-deck" speed still further. However, despite the beneficial effects of the increased wind-over-deck speeds, there are still only a very few aircraft which have a short take-off and landing capability which allows them to take-off and land on aircraft carriers without expensive and heavy modification.

German Patent No. DE-A-1,164,245 discloses an apparatus usable during the landing phase of flight of an aircraft comprising a headwind generator positioned, at the moment of landing, in the vicinity of where the aircraft is to land and arranged to move ahead of the aircraft after it has landed to slow it down on the ground.

It is an object of the present invention to provide a means of assisting aircraft to land in situations where only a small runway area is available, such as on an aircraft carrier.

According to the invention there is provided apparatus for use during a landing phase of flight of an aircraft, the apparatus comprising an aircraft headwind generator positioned in the vicinity of the ground or deck where the aircraft is to land for generating a headwind for said aircraft characterised in that said headwind generator comprises of one or more engines positioned below ground/deck level and the exhausted air being ducted into the landing trajectory by angled louvres positioned at ground or deck level.

Thus, the wind-over-deck speed may be increased by the headwind generator.

The headwind generator may comprise at least one jet engine or propeller.

Preferably the apparatus further comprises a headwind steering flap positioned at some location along the centreline between the headwind gas generator and the aircraft landing trajectory for directing the headwind in elevation.

The headwind generator may comprise of two headwind outlets, positioned in the aircraft landing vicinity one on each side of the aircraft landing trajectory.

In order to generate the required headwind a Plenum chamber is created below the louvered deck into which air is blown from below, in front, from behind or from either side. The entry position of the air to the Plenum chamber is not considered critical since the louvres are arranged such that the air can only exit through the louvered openings and along the deck.

For a better understanding of the invention an embodiment of it will now be described by way of two non-limiting examples, with reference to the accompanying drawings in which:-
Figure 1 shows an aircraft coming in to land on an aircraft carrier on which an under ground/deck level headwind generator is fitted in accordance with the present invention.
Figure 2 shows the proposed headwind steering control mechanism to be used in conjunction with headwind generation method shown in figure 1.
Figures 3A and 3B show the aircraft flying towards the headwind during landing;
Figure 4 is a graph illustrating an example landing trajectory of an aircraft.

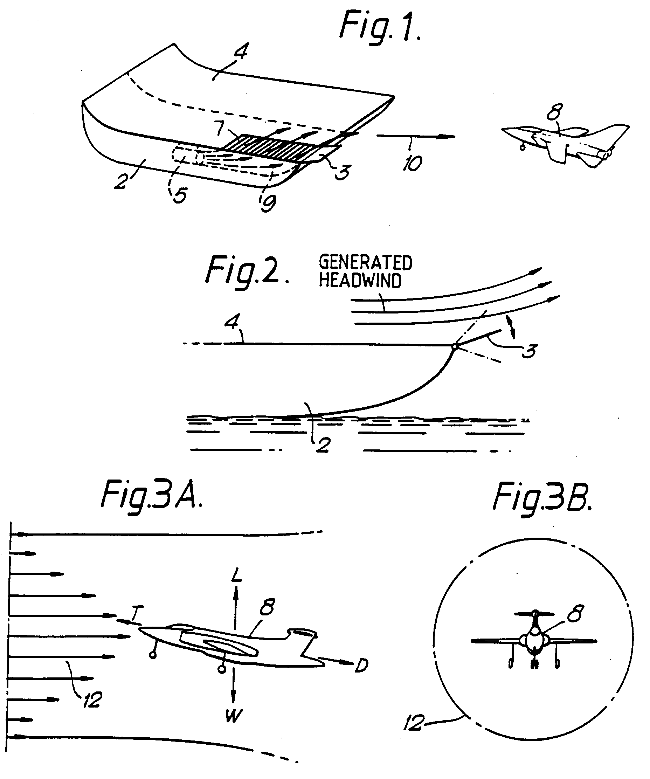

Figure 1 shows an aircraft carrier (2) including a flat deck area (4) on which aircraft may land, and from which they may take off using an underground/deck level headwind generation system. The headwind generating engines (5) are positioned below ground/deck level (4) and blow air via a Plenum chamber (9) through a series of louvres (7) shown aligned laterally across a portion of the ground/deck area (4). The flow of the air through the succession of the louvered exits (7) produces a gradually thickening jet of air directed aft of the aircraft carrier deck. In the illustrated example the louvered outlet (7) of the headwind generator is positioned on the rearmost portion of the deck (4), i.e. the portion nearest the aircraft (8) as it comes in to land, although it should be appreciated that the said louvered outlet (7) could be positioned elsewhere on the deck depending on the requirements in any particular case. A headwind steering control mechanism (3) is shown positioned at the aft end of the deck to enable control of the vertical angle of the headwind away from the deck. Also, a drive arrangement may be provided which allows the orientation of the headwind generators to be varied.

A system of under deck thermal generators ducted to produce a flow of hot gasses above the deck level of an aircraft carrier has been patented under Patent No. 1,036,015 at the London Patent Office. This invention was designed primarily for use as a fog clearing mechanism achieved by heating the surrounding atmosphere. No claim is made with reference to a headwind generator to facilitate lower groundspeed landings for aircraft as detailed in this application. The direction of the jet of air emanating from the louvered system can be varied in elevation to accommodate differing approach angles for different landing craft using the flap mechanism (3).

The headwind generators 5 may employ propellers or they may be jet engines. In combination, the generators are capable of producing 15000kW (20,000 bhp) in the former case, and 26700N (60,000lb) of jet thrust in the latter case. For example, suitable headwind generation could obtained from four Tyne turboprop engines or one RB211 jet engine.

As an aircraft (8) begins its landing phase of flight, the underground/deck headwind generator 5 is activated, thereby producing a headwind in the general direction of arrow (10). The aircraft (8) and/or the ship (2) must locate the centre of the headwind (12) (as illustrated in figures 3A and 3B) formed by the flow of the underground/deck level louvered gasses (5) so that the aircraft (8) may take an appropriate flight path. It is thought that a flight path just above the centre of the jet will be stable in altitude, and therefore advantageous.

To assist the aircrew and persons controlling the direction of the headwind, a form of flow centreline visualisation is necessary. Smoke or some other marking medium maybe added to the headwind flow in either a continuous or intermittent manner to allow the headwind flow to be visualised. Alternatively a lightweight streamer in the form of a rope or a tape which is non-injurous to the aircraft or its engine may be trailed from the carrier deck to again indicate the centreline of the headwind flow.

Such a headwind generator will increase the wind-over-deck speed, thereby reducing the aircraft speed relative to the ship's deck (4) required for a given amount of wing lift. Ideally, the aircraft speed relative to the deck (4) would be zero - so allowing a near-vertical descent of the aircraft (8) onto the deck (4) whilst the aircraft (8) is still fully wing-born. In practice, it is thought touch-down speeds of less than 20 knots relative to the aircraft carrier will be typical.

Various published data sources, supported by our research, indicate that a stream of moving air mixes with the surrounding air at a consistent rate such that it has a reducing velocity and increasing area downstream.

The typical centreline velocity ratios and diameters at downstream distances expressed in diameters of the initial jet diameter are:-

| DISTANCE | VELOCITY RATIO | DIAMETER |
|---|---|---|
| 0 | 1.00 | 1.0 |
| 15 | 0.50 | 2.0 |
| 30 | 0.25 | 4.0 |
| 60 | 0.125 | 8.0 |

Thus, an initial jet velocity of, say, 120 knots with a jet of 10 metres in diameter will reduce to 60 knots at a distance of 150 metres from the outlet, 30 knots at 300 metres, etc. In practice a smaller but higher speed jet may be used, as many a non-circular jet.

For an example aircraft, having a notional approach speed of 120 knots, a deceleration capability of up to 0.3 "g" is available at this speed by reducing aircraft thrust to idle, at a lift/drag ratio of about 3, in the landing configuration.

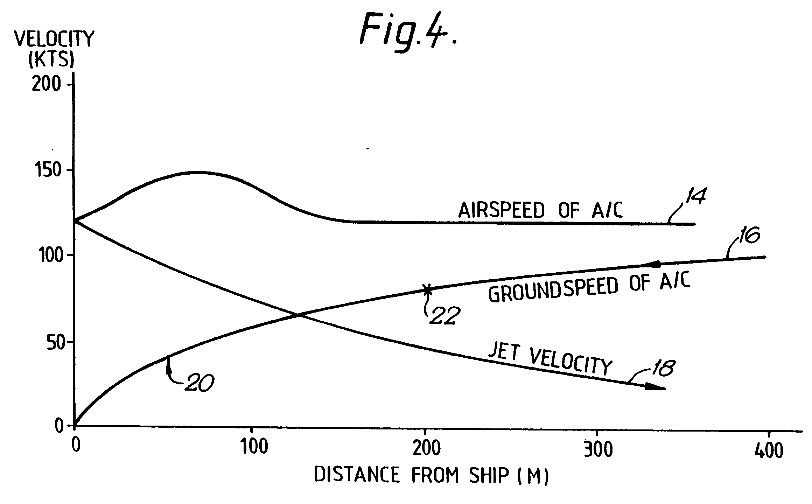

By parametrically varying jet diameter and jet velocity it may be possible to find combinations which will allow the aircraft to decelerate relative to the aircraft carrier (2) so as to arrive at the deck (4) in a "hovering" condition at 120 knots air speed, but zero ground speed. The graph in Figure 4 shows an example of the way in which the air speed of an aircraft, the ground speed of the aircraft and the jet velocity (indicated by lines 14, 16 and 18 respectively) might vary during landing. The point 20 represents 5 seconds before aircraft landing, and the point 22 represents 10 seconds before landing.

Although, in the example illustrated, a number of generators (5) are used below deck level, various other configurations are also possible. However, the configuration illustrated does offer the advantage that the aircraft 8 can fly over the louvres in Figure 1, therefore allowing it to take off from the deck (4) again after it has touched-down if there is insufficient time for the aircraft to decelerate and successfully land. Alternatively, any other number of such headwind generators could be employed. It may be desirable to have one wind generator which supplies several headwind outlets positioned appropriately around the deck.

A further effect of the headwind generator producing a rearwards-directed headwind is to increase the forward speed of the aircraft carrier (or cause movement if the ship is stationary prior to operation of the generators). This feature is particularly advantageous if the carrier's main propulsion system fails.

## Claims

1. Apparatus for use during a landing phase of flight of an aircraft, the apparatus comprising an aircraft headwind generator positioned in the vicinity of the ground or deck where the aircraft is to land for generating a headwind for said aircraft characterised in that said headwind generator comprises of one or more engines (5) positioned below ground/deck level (4) and the exhausted air being ducted into the landing trajectory by angled louvres (7) positioned at ground or deck level.

2. Apparatus according to Claim 1 characterised in that the headwind may be directed in elevation by use of a headwind steering flap (3) positioned at some location along the centreline between the headwind gas outlet (7) and the aircraft landing trajectory.

## Patentansprüche

1. Vorrichtung zur Benutzung während der Landeanflugsphase eines Flugzeugs, wobei die Vorrichtung einen Flugzeug-Gegenwindgenerator aufweist, der in der Nähe des Bodens oder des Decks angeordnet ist, wo das Flugzeug landen soll, um für dieses Flugzeug einen Gegenwind zu erzeugen,
dadurch gekennzeichnet, daß der Gegenwindgenerator eines oder mehrere Triebwerke (5) aufweist, die unter der Ebene (4) von Boden/Deck angeordnet sind, und daß die ausgeblasene Luft in die Landeflugbahn durch im Winkel angestellte Leitflächen (7) ausgeblasen wird, die in Höhe des Bodens oder des Decks angeordnet sind.

2. Vorrichtung nach Anspruch 1,
dadurch gekennzeichnet, daß der Gegenwind in die Höhe unter Verwendung einer Gegenwind-Steuerklappe (3) gerichtet wird, die an einer bestimmten Stelle entlang der Mittellinie zwischen dem Gegenwind-Gasauslaß (7) und der Flugzeug-Landeflugbahn angeordnet ist.

## Revendications

1. Appareil destiné à être utilisé dans une phase d'atterrissage du vol d'un aéronef, l'appareil comportant un générateur de vent debout de l'aéronef placé au voisinage du sol ou du pont sur lequel l'aéronef doit atterrir et destiné à créer un vent debout pour l'aéronef, caractérisé en ce que le générateur de vent debout comporte un ou plusieurs réacteurs (5) placés au-dessous du niveau du sol ou du pont (4), l'air chassé étant conduit sur la trajectoire d'atterrissage par des jalousies inclinées (7) placées au niveau du sol ou du pont.

2. Appareil selon la revendication 1, caractérisé en ce que le vent debout peut être dirigé en élévation à l'aide d'un volet (3) de direction de vent debout placé à un certain emplacement suivant l'axe central entre la sortie (7) de gaz de vent debout et la trajectoire d'atterrissage de l'aéronef.
